# EUROPEAN PATENT APPLICATION

(11) **EP 2 749 626 A1**
(43) Date of publication of application: **02.07.2014**
(21) Application number: 13198971.7
(22) Date of filing: 20.12.2013
(51) Int. Cl.: C10G 1/02, C10G 3/00, C02F 11/10

(54) **Integrated process for the production of biofuels from solid urban waste**

(30) Priority: 28.12.2012 IT MI20122253
(71) Applicant: ENI S.p.A., 00144 Rome (IT)
(72) Inventor: Bosetti, Aldo, 13100 Vercelli (IT); Bianchi, Daniele, 20020 Arese (MI) (IT); Moscotti, Daniele Giulio, 28061 Brugheiro (MB) (IT); Pollesel, Paolo, 20097 San Donato Milanese (MI) (IT)
(74) Representative: Hansen, Norbert

(57) **Abstract**

Integrated process for the production of biofuels from solid urban waste which comprises:
- subjecting said waste to liquefaction obtaining a mixture comprising an oily phase consisting of bio-oil, a solid phase and an aqueous phase;
- subjecting the mixture obtained from said liquefaction to separation obtaining an oily phase consisting of bio-oil, a solid phase and an aqueous phase;
- subjecting the oily phase consisting of bio-oil, obtained from said separation to hydroconversion in slurry phase, in the presence of at least one nano-dispersed hydrogenation catalyst;

wherein said liquefaction is carried out at a temperature ranging from 150°C to 350°C, preferably ranging from 200°C to 320°C, at a pressure ranging from 5 bar to 170 bar, preferably ranging from 15 to 115 bar and for a time ranging from 5 minutes to 240 minutes, preferably ranging from 15 to 90 minutes.

The biofuels thus obtained can be used as such, or in a mixture with other fuels, for automotive.

## Description

The present invention relates to an integrated process for the production of biofuels from solid urban waste.

More specifically, the present invention relates to an integrated process for the production of biofuels from solid urban waste which comprises subjecting said waste to liquefaction, separating the oily phase consisting of bio-oil obtained from said liquefaction and subjecting said oily phase consisting of bio-oil to hydroconversion in slurry phase in the presence of at least one nanodispersed hydrogenation catalyst.

The biofuels thus obtained can be used as such, or in a mixture with other fuels, for automotive.

As a result of the decrease in fuel reserves of a fossil origin and of the negative impact on the environment produced by anthropic emissions of carbon dioxide (CO₂), all studies directed towards the production of biofuels and allowing, in the long run, complete transition to renewable energy vectors, are becoming of increasing importance. Among the new sustainable energy sources, biomasses can significantly contribute to achieving these objectives.

Solid urban waste, for example, in particular of an organic origin, represents a potential raw material for the production of liquid fuels. Four types of waste can be mainly associated with this category:
- the organic fraction of solid urban waste deriving from selected collection;
- pruning deriving from the maintenance of public parks;
- agribusiness waste products and waste products of large retailers;
- primary and biological sludges produced by urban water treatment plants.

Most of these materials are currently disposed of in landfills or sent to composting, and/or incineration, and/or anaerobic digestion plants.

Alternatively, solid urban waste could be used as raw material in a liquefaction process (thermal treatment carried out on wet biomasses) for the production of bio-oil to be sent to a subsequent refinery step (upgrading) for the production of biofuels for automotive. Due to the high content of oxygen or of other heteroatoms, in fact, bio-oil is not suitable for being used either as such as fuel for automotive, or mixed with other fuels for automotive. The removal of hetero-elements, the maximization of the yield to liquid products of a hydrocarbon type within the correct distillation range, the correspondence with the specifications and the regulations for automotive fuels, are consequently the primary objective of upgrading processes for the production of biofuels. The upgrading of bio-oil can be carried out, for example, through thermal pyrolysis or cracking processes, or through hydrotreatment, and/or hydrocracking and/or hydroisomerization processes.

It should also be taken into account that solid urban waste is also considered an optimum raw material for producing biofuels as this raw material does not have to be produced but, on the contrary, has already been collected and localized in medium/large storage centres. Furthermore, this raw material is obviously not in conflict with agri-food cycles, as is the case on the contrary, with many other biomasses normally used as renewable energy sources.

Efforts have been made in the art to utilize urban and/or industrial and/or agricultural waste and/or residues, for energy purposes.

American patent US 4,618,736, for example, describes a process for producing hydrocarbons from a cellulose material comprising the following steps: forming a suspension of the cellulose material in a polycyclic liquid hydrogen-donor compound, said suspension containing a quantity of water equal to at least 5% by weight, but not more than approximately 10% by weight, with respect to the weight of the cellulose material; subjecting the suspension to a temperature higher than 200°C and to an increasing pressure up to at least 1000 psi, in the presence of hydrogen, in order to obtain the hydrogenation of the cellulose material and to produce a mixture of gaseous, liquid and solid hydrocarbons, having an oxygen content lower than 10% by weight and a calorific power of over 15000 Btu/Ib; separating the mixture of hydrocarbons into three phases: gaseous, liquid and solid; recovering said polycyclic liquid hydrogen-donor compound from the liquid phase and recycling it to the treatment of cellulose material. Said cellulose material can derive from domestic or urban waste or from vegetables. Said polycyclic liquid hydrogen-donor compound is preferably tetralin.

American patent US 4,670,613 describes a process for the production of liquid products containing hydrocarbons which essentially consists in introducing a biomass into a reaction area, in the presence of water, at a pressure higher than the partial pressure of the water vapour and at a temperature of at least 300°C, leaving said biomass in the reaction area for more than 30 seconds; separating the solid products from the fluid leaving the reaction area and maintaining the fluid remaining in said area in a single phase; subsequently separating the liquid products from the remaining fluid. Said biomass can be selected from a wide range of biomasses of different origins such as, for example, biomasses of a vegetable origin, biomasses deriving from agricultural waste or urban waste.

Goudriaan et al., in "Chemical Engineering Science" (1990), Vol. 45, No. 8, pages 2729-2734, describe the process known as HTU or "HydroThermal Upgrading". Said process allows the conversion of biomass deriving from plants cultivated for energy purposes ("energy crops") into liquid fuel (e.g., bio-oil) which comprises treating the biomass in the presence of water, at a temperature higher than 300°C, for a time ranging from 5 minutes to 15 minutes, at a pressure of 180 bar.

American patent US 7,262,331 describes a process for the production in continuous of hydrocarbons having an improved energy density from biomass, comprising: a first step in which an aqueous feed containing biomass, not pre-heated or pre-heated to a temperature ranging from 50°C to 95°C, is subjected to a treatment which comprises bringing said feed in a single step from a pressure of 5 bar or lower to a pressure ranging from 100 bar to 250 bar; a second subsequent step in which the temperature of the feed under pressure is increased from 95°C or less, to 180°C or over, and the pressurized feed is maintained at a temperature not exceeding 280°C for a period of up to 60 minutes, thus forming a reaction mixture; a reaction step wherein the reaction mixture is heated for a period of up to 60 minutes to a temperature higher than 280°C. Said biomass can be selected from mixtures of biomass/water deriving from the aerobic or anaerobic fermentation of industrial or urban waste having a water/biomass ratio ranging from 4 to 5. Biomass deriving from agricultural waste or from domestic or urban biowaste having a water/biomass ratio ranging from 1 to 4, can also be used.

American patent application US 2010/0192457 describes a method for producing fuel oil which comprises adding an organic solvent to a biomass including lignocellulose, whose humidity content is regulated so as to obtain a total humidity content (i.e. humidity of said organic solvent + humidity of the biomass) ranging from 10% to 25%, and subjecting the biomass thus obtained to liquefaction at a temperature ranging from 250°C to 350°C.

Processes are also known for the upgrading of bio-oil to give hydrocarbon cuts to be used in the field of biofuels.

American patent US 5,180,868, for example, describes a multi-step method for the production of gasoline with a high content of aromatic compounds, comprising the following steps:
- deoxygenating a crude oil comprising hydroxyaromatic hydrocarbon compounds containing one or more rings, at a temperature of 300°C - 450°C so as to obtain a deoxygenated oil comprising compounds containing one or more aromatic rings;
- removing the water from said deoxygenated oil;
- distilling the deoxygenated oil obtained in order to remove the compounds containing one aromatic ring such as gasoline and leaving the compounds containing more aromatic rings;
- after distillation, subjecting the compounds containing more aromatic rings to cracking in the presence of hydrogen and of a bifunctional catalyst so as to obtain a cracked oil, comprising compounds containing one aromatic ring; and
- distilling the cracked oil in order to remove the compounds containing one aromatic ring, such as gasoline.

Said crude oil can derive from the liquefaction of biomass.

American patent application US 2010/0083566 describes a process for the preparation of a component for bio-gasoline which comprises:
(I) obtaining at least one bio-oil and, if necessary, subjecting said bio-oil to liquefaction;
(II) feeding the bio-oil in liquid form to a fluidbed catalytic cracking reactor (FCC - "Fluid Catalytic Cracking") together with at least one mineral oil;
(III) subjecting the components fed to said reactor to cracking so as to obtain at least one fraction of liquefied petroleum gas ("bio-LPG" - i.e. "bio-Liquefied Petroleum Gas") and one fraction of bio-naphtha;
(IV) subjecting at least a part of the fraction of liquefied petroleum gas (bio-LPG) to alkylation or to catalytic polymerization; and
(V) combining at least a part of the product obtained in step (IV) with at least a part of the bio-naphtha fraction so as to form a component for bio-gasoline.

Said bio-oil can derive from fish, algae grown in ponds or bioreactors, marine microorganisms or mammals.

American patent application US 2011/0160505 describes a process for the preparation of hydrocarbons from a feedstock deriving from renewable sources comprising at least one "tall oil" (i.e. by-product of the Kraft production process of cellulose pulp), said process comprising:
a. heating the feedstock deriving from renewable sources comprising at least one "tall oil" to a temperature ranging from about 60°C to about 80°C;
b. bringing the feedstock deriving from renewable sources to a reaction area, maintaining the temperature at a value ranging from about 60°C to about 80°C;
c. treating the feedstock deriving from renewable sources in the reaction area by means of hydrogenation and deoxygenation in order to obtain a reaction product comprising paraffins having from 8 to 24 carbon atoms, and recycling a part of the reaction product to the reaction area wherein the volume ratio between the recycled reaction product and the feedstock ranges from about 2:1 to about 8:1; and
d. isomerizing at least a part of the paraffins present in the reaction product in an isomerization area by contact with an isomerization catalyst, under isomerization conditions, so as to isomerize at least a part of the paraffins to branched paraffins and generate the hydrocarbon product.

International patent application WO 2012/005784 describes a process for the liquefaction of biomass which comprises combining the biomass with a mixture of solvents comprising at least one liquefaction solvent and at least one make-up solvent in a pressurized reaction container so as to obtain a liquefaction mixture, and heating the liquefaction mixture to a temperature of about 250°C, operating at a pressure of about 200 psi, so as to obtain a crude reaction product comprising liquid bio-oil, wherein the liquefaction solvent has a Hansen interaction radius with coniferyl alcohol lower than 15 MPa^{1/2}, and wherein hydrogen in gaseous form is not added.

The bio-oil obtained can be mixed with other refinery streams and subjected to hydrotreatment stage in order to obtain biofuels.

The above upgrading processes of bio-oil, however, can have some drawbacks. These processes often presuppose the creation of an upgrading plant specific for bio-oil. Furthermore, the bio-oil is at times subjected to intermediate purification passages, with an increase in the overall process cost. In addition, bio-oil is more polar than a petroleum cut, as it contains a residual amount of heteroatoms ranging from 10% to 18% by weight with respect to the overall weight of the bio-oil. For this reason, the bio-oil can substantially be only slightly diluted with refinery hydrocarbon streams and, in general, in order to co-feed it together with said hydrocarbon streams to refinery plants already existing, co-solvents with at least a medium polarity are used, capable of facilitating its miscibility with said hydrocarbon streams. This expedient, however, also leads to an increase in the operating costs in the refinery plant due to the use of solvents not typically hydrocarbon such as those normally used.

The Applicant has faced the problem of finding a process for the production of biofuels from solid urban waste which allows the bio-oil obtained from said solid urban waste to be sent directly to a refinery plant, in particular to a hydroconversion section. In particular, the Applicant has faced the problem of finding a process for the production of biofuel from solid urban waste capable of using the bio-oil obtained from said solid urban waste in a refinery plant normally used for the treatment of heavy crude oils and residues of subatmospheric distillation.

The Applicant has now found that the production of biofuels from solid urban waste can be advantageously carried out by means of a process which comprises subjecting said waste to liquefaction, separating the oily phase consisting of bio-oil and obtained from said liquefaction and subjecting said oily phase consisting of bio-oil to hydroconversion in slurry phase in the presence of at least one nanodispersed hydrogenation catalyst. The biofuels thus obtained can be used as such, or mixed with other fuels, for automotive.

Numerous advantages can be obtained with the above process, such as, for example:
- use of waste biomasses for which there is already a collection chain;
- use of biomasses which do not compete with the food cycle and completion of said cycle allowing a route to valorize its waste;
- use of biomasses which do not have to be cultivated with exploitation of agricultural and/or forest surfaces;
- liquefaction treatment which does not require the use of catalysts;
- integration between conversion of a waste biomass into bio-oil (i.e. liquefaction) with hydroconversion of the same and subsequent upgrading of the products obtained so as to obtain biofuels (i.e. bio-diesel, bio-gasoline);
- sending the bio-oil obtained from liquefaction as such to hydroconversion without the need for

pre-treatments and/or the addition of solvents;
- upgrading the products obtained from hydroconversion, which does not require a plant specifically dedicated for the upgrading of bio-oil, said treatment being carried out in refinery plants already operating, in which normal oil cuts are treated;
- use of the same operative conditions used for upgrading oil cuts of a fossil origin, with the advantage of not having to significantly modify refining plants already operating: this increases the versatility of the refinery section, with positive repercussions on the refinery margins;
- possibility of feeding the bio-oil to the hydroconversion treatment in co-feeding with normal petroleum cuts: this allows a proportional increase to be obtained, in the amount of products that can be used in the diesel field (bio-diesel), thanks to the introduction of a component of a biological origin;
- non-use of co-solvents either in the liquefaction phase or in the upgrading phase.

An object of the present invention therefore relates to an integrated process for the production of biofuels from solid urban waste comprising:
- subjecting said waste to liquefaction obtaining a mixture comprising an oily phase consisting of bio-oil, a solid phase and an aqueous phase;
- subjecting the mixture obtained from said liquefaction to separation obtaining an oily phase consisting of bio-oil, a solid phase and an aqueous phase;
- subjecting the oily phase consisting of bio-oil, obtained from said separation, to hydroconversion in slurry phase, in the presence of at least one nanodispersed hydrogenation catalyst;
wherein said liquefaction is carried out at a temperature ranging from 150°C to 350°C, preferably ranging from 200°C to 320°C, at a pressure ranging from 5 bar to 170 bar, preferably ranging from 15 bar to 115 bar, and for a time ranging from 5 minutes to 240 minutes, preferably ranging from 15 minutes to 90 minutes.

For the aim of the present description and of the following claims, the definition of the numerical ranges always includes the extremes, unless otherwise specified.

For the aim of the present description and of the following claims, the term "biofuels" refers to fuels containing at least one component of a biological origin in a quantity higher than or equal to 0.5% by weight with respect to the total weight of the fuels contained therein.

For the aim of the present description and of the following claims, the term "comprising" also includes the terms "essentially consisting of" or "consisting of".

For the aim of the present description and of the following claims, the term "nanodispersed" means that the hydrogenation catalyst has an average diameter smaller than or equal to 10 nm, preferably ranging from 1 nm to 6 nm.

According to a preferred embodiment of the present invention, said solid urban waste can be selected, for example, from:
- the organic fraction of solid urban waste deriving from selected collection;
- prunings deriving from the maintenance of public parks;
- agribusiness waste products and waste products of large retailers;
- primary and/or biological sludges produced by urban water treatment plants;
or mixtures thereof. The organic fraction of solid urban waste deriving from selected collection and primary and/or biological sludges produced by urban water treatment plants, are preferred.

According to a preferred embodiment of the present invention, said solid urban waste can be treated by subjecting it to a preliminary grinding or sizing process before being liquefied.

According to a preferred embodiment of the present invention, said solid urban waste is wet. Said solid urban waste can preferably have a water content higher than or equal to 50% by weight, preferably ranging from 55% to 80% by weight, with respect to the total weight of said solid urban waste.

Said liquefaction can be carried out in reactors known in the art, such as, for example, autoclaves.

Said liquefaction can be carried out operating in various modes such as, for example, batchwise or in continuous.

Considering that the thermal energy necessary in said liquefaction can either totally or partially derive from the thermal recovery or combustion of traditional energy vectors, for example methane gas, liquid petroleum gas (LPG), mineral oil, coal, etc., it is not excluded that the thermal energy can derive from other renewable sources such as, for example, solar sources, or biomasses.

Said separation can be carried out using techniques known in the art, such as, for example, gravity separation (i.e. sedimentation, decanting), filtration, centrifugation. Said separation is preferably carried out by means of gravity separation.

During said liquefaction a gaseous phase is also formed, equal to about 10% by weight - 25% by weight with respect to the weight (dry weight) of said solid urban waste. Said gaseous phase is mainly composed of carbon dioxide (CO₂) (about 80% in moles - 95% in moles) and of a mixture of hydrocarbons having from 1 to 4 carbon atoms or of other gases (about 5% in moles - 20% in moles). This gaseous phase, after separation, separation which can be carried out, for example, by depressurization of the pressurized container in which said liquefaction is carried out before sending the mixture (oily phase + solid phase + aqueous phase) obtained in said liquefaction to separation, is generally sent to further treatments in order to upgrade its organic fuel component.

The solid phase obtained after separation generally comprises ashes and inert materials. Said solid phase can be used, for example, as starting inorganic material in the building industry, or in the ceramic industry.

The aqueous phase obtained after separation comprises part of the organic material included in said solid urban waste. Said aqueous phase can generally have a content of organic material higher than or equal to 25% by weight, preferably ranging from 30% to 50% by weight, with respect to the total weight of the dry fraction of said solid urban waste. Said aqueous phase can be subjected to further treatments such as, for example, biological treatments, before being disposed of.

Bio-oil can be produced from said liquefaction, with an overall yield ranging from 15% to 50%, said yield being calculated with respect to the weight of the dry fraction of the initial solid urban waste. Alternatively, in order to increase the yield of bio-oil (i.e. an increase in yield ranging from 5% to 30%, said increase in yield being calculated with respect to the weight of the dry fraction of the initial solid urban waste), said aqueous phase can be recycled to said liquefaction.

In this respect, said aqueous phase can be subjected to fermentation in the presence of at least one oleaginous yeast obtaining a biomass which can be subjected to said liquefaction as described, for example, in international patent application WO 2011/030196 in the name of the Applicant; or, said aqueous phase can be subjected to treatment with at least one adsorbing material obtaining a further aqueous phase which can be subjected to fermentation in the presence of at least one oleaginous yeast obtaining a biomass which can be subjected to said liquefaction as described, for example, in international patent application WO 2011/128741 in the name of the Applicant; or, said aqueous phase can be sent back to aerobic treatment, for example, to a water purification plant as described, for example, in international patent application WO 2011/117319 in the name of the Applicant.

According to a preferred embodiment of the present invention, said oily phase consisting of bio-oil can be subjected to hydroconversion together with heavy oils of a fossil origin such as, for example, heavy crude oils, bitumens deriving from tar sands, distillation residues, heavy residues deriving from thermal treatment processes, oils deriving from coal, oil shales.

According to a preferred embodiment of the present invention, said oily phase consisting of bio-oil and said heavy oils of a fossil origin can be used in a weight ratio ranging from 0.01 to 50, preferably ranging from 0.1 to 10.

It should be noted that, for the aim of the present invention, said hydroconversion can be carried out by means of the EST technology (Eni Slurry Technology) described in detail in the following Italian patent applications: MI95A001095, MI2001A001438, MI2002A002713, MI2003A000692, MI2003A000693, MI2003A002207, MI2004A002445, MI2004A002446, MI2006A001512, MI2006A001511, MI2007A001302, MI2007A001303, MI2007A001044, MI2007A001045, M12007A001198, MI2008A001061.

The EST technology, in fact, allows a wide versatility with respect to the hydrocarbon feedstock (i.e. to the hydrocarbon materials subjected to hydroconversion), allowing the conversion of a wide type of hydrocarbon materials, among which heavy crude oils, bitumens deriving from tar sands, distillation residues, heavy residues from thermal treatment processes, oils from coal and oil shales. As mentioned in the above Italian patent applications, the hydroconversion is carried out in the presence of at least one hydrogenation catalyst which preferably consists of sulfides of transition metals, more preferably molybdenum (Mo), tungsten (W), nickel (Ni), cobalt (Co), ruthenium (Ru), iron (Fe), chrome (Cr): among these transition metals, molybdenum (Mo) and tungsten (W) show the most satisfactory performances. Said nanodispersed hydrogenation catalyst can also be introduced as oil-soluble precursor mixed with the hydrocarbon feedstock: in this case, the active form of the nanodispersed hydrogenation catalyst is formed in *situ* by means of thermal decomposition of the precursor in the reaction environment. The hydrocarbon feedstock is preferably sent to the reaction section which, as specified in the above Italian patent applications, generally consists of one or more bubble columns, together with a stream of hydrogen or a stream consisting of a mixture of hydrogen/hydrogen sulfide (H₂S), operating under the following conditions: temperature preferably ranging from 350°C to 480°C, pressure preferably ranging from 100 bar to 200 bar, average residence time preferably ranging from 2 hours to 6 hours. At the end of the hydroconversion the following products are obtained:
- gaseous products, i.e. fuel gas and liquid petroleum gas (LPG) which are used as such as fuels;
- liquid products, i.e. naphtha, atmospheric gas oil (AGO) and vacuum gas oil (VGO) which are sent to separation and, subsequently, to upgrading so as to obtain fuels for automotive (i.e. diesel, gasoline);

- a fraction of heavier products (500+°C) (i.e. non-converted products) which also contains the nanodispersed hydrogenation catalyst, together with the small fraction of coke optionally formed and sulfides of the metals present in the hydrocarbon feedstock itself, which is recycled (i.e. recycled stream) to the hydroconversion to which it is fed together with the fresh hydrocarbon feedstock.

In order to keep the concentration of solids present in the system constant, a blow down is preferably applied: the entity of said blow down depends on the severity of the operating conditions and on the type of hydrocarbon feedstock used. In this way, an aliquot of the catalyst is also removed, which must be reintegrated, by means of make-up catalyst, introduced together with the fresh hydrocarbon feedstock.

According to a preferred embodiment of the present invention, said hydroconversion can be carried out in the presence of a hydrogen stream or of a stream consisting of a mixture of hydrogen/hydrogen sulfide (H₂S).

According to a preferred embodiment of the present invention, said nanodispersed hydrogenation catalyst can be selected from sulfides of transition metals such as, for example, molybdenum sulfide (MoS₂), tungsten sulfide (WS₂), or mixtures thereof, or an oil-soluble precursor of the same.

According to a preferred embodiment of the present invention, said hydrogenation catalyst can be used in such as quantity that the concentration of transition metal present in the oily phase consisting of bio-oil, or in the oily phase consisting of bio-oil together with heavy oils of a fossil origin, can range from 50 wppm to 50000 wppm, preferably from 100 wppm to 30000 wppm (wppm = "weight part per million").

A co-catalyst can be optionally used together with said hydrogenation catalyst, having particles with nanometric or micrometric dimensions, which can be selected from cracking and/or denitrogenation catalysts such as, for example, zeolites having small-dimensioned crystals and with a low aggregation degree between the primary particles, oxides, sulfides or precursors of nickel (Ni) and/or cobalt (Co), in a mixture with molybdenum (Mo) and/or tungsten (W): further details relating to the use of said co-catalyst can be found, for example, in Italian patent application MI2008A001061 indicated above.

According to a preferred embodiment of the present invention, said hydroconversion can be carried out at a temperature ranging from 350°C to 480°C, preferably ranging from 380°C to 450°C.

According to a preferred embodiment of the present invention, said hydroconversion can be carried out at a pressure ranging from 100 bar to 200 bar, preferably ranging from 120 bar to 180 bar.

According to a preferred embodiment of the present invention, said hydroconversion can be carried out with an average residence time ranging from 2 hours to 8 hours, preferably ranging from 3 hours to 6 hours.

Said hydroconversion can be carried out in one or more reactor(s) in series selected from hydroconversion reactors in slurry phase previously described in the Italian patent applications indicated above.

At the end of said hydroconversion, the following products are obtained:
- gaseous products, i.e. fuel gas and liquid petroleum gas (LPG) which are used as such as fuels;
- liquid products, i.e. naphtha, atmospheric gas oil (AGO) and vacuum gas oil (VGO) which are sent to separation and, subsequently, to upgrading so as to obtain biofuels for automotive (i.e. bio-diesel, bio-gasoline);
- a fraction of heavier products (500+°C) (i.e. non-converted products) which also contains the nanodispersed hydrogenation catalyst, together with the small fraction of coke optionally formed and sulfides of the metals present in the hydrocarbon feedstock itself (i.e. oily phase consisting of bio-oil or oily phase consisting of bio-oil together with heavy oils of a fossil origin), which is recycled (i.e. recycled stream), after blow down, to the hydroconversion to which it is fed together with the fresh hydrocarbon feedstock and make-up catalyst.

The separation of said liquid products can be carried out by means of processes known in the art such as, for example, flash separation, distillation, gravity separation.

Said upgrading can be carried out by means of processes known in the art such as, for example, cracking, hydrogenation, hydrocracking, in order to obtain biofuels for automotive (i.e. bio-diesel, bio-gasoline).

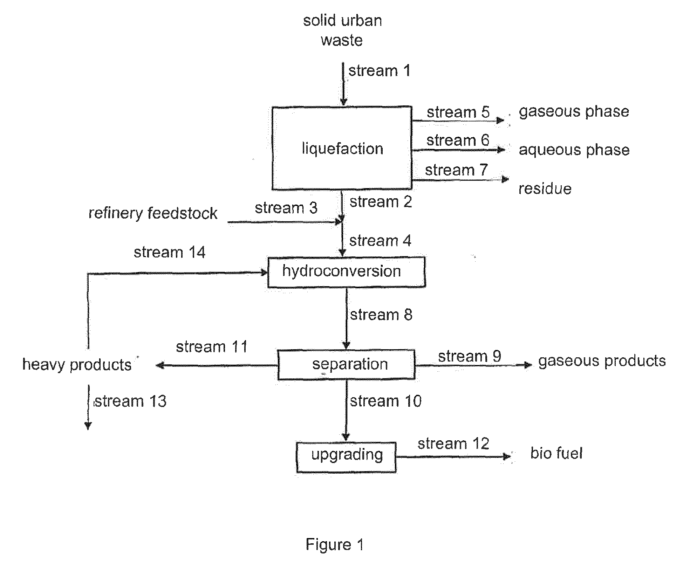

The present invention will now be illustrated by means of an embodiment with reference to Figure 1 provided hereunder.

According to a typical embodiment of the process object of the present invention, the solid urban waste (e.g., sludges deriving from an urban wastewater treatment plant) (Stream 1) is subjected to liquefaction obtaining: a mixture (not represented in Figure 1) including three phases, i.e. an oily phase consisting of bio-oil, a solid phase (i.e. residue) and an aqueous phase; and, as already indicated above, a gaseous phase. Said mixture is sent to a separation section of phases (not represented in Figure 1) in order to separate the above three phases obtaining: an oily phase consisting of bio-oil (Stream 2), a solid phase (i.e. residue) (Stream 7) comprising ashes, inert products, which can be used, for example, as starting inorganic material in the building industry, or in the ceramic industry, and an aqueous phase (Stream 6) which can be subjected to further treatments such as, for example, biological treatments, before being disposed of, or it can be subjected to optional adsorption with at least one adsorbing material and subsequent fermentation in the presence of at least on oleaginous yeast, obtaining a biomass which can be subjected to said liquefaction together with said solid urban waste (Stream 1) (not represented in Figure 1) as described above.

As described above, during the liquefaction, a gaseous phase (Stream 5) comprising carbon dioxide (CO₂), gaseous hydrocarbons having from 1 to 4 carbon atoms, or other gases, is also produced, which can be separated, for example, by depressurization of the pressurized recipient in which said liquefaction is carried out before sending the mixture (oily phase consisting of bio-oil + solid phase + aqueous phase) obtained after liquefaction to the separation section of phases. The gaseous phase thus obtained (Stream 5) can be sent to further treatments for upgrading its organic fuel component.

Said oily phase consisting of bio-oil (Stream 2) is added with a refinery hydrocarbon feedstock (Stream 3) and the mixture obtained (Stream 4) is sent to hydroconversion in the presence of a nanodispersed hydrogenation catalyst [e.g., a catalyst based on molybdenum (MoS₂)], obtaining a reaction effluent (Stream 8) which is sent to separation [e.g., flash separation, distillation] (not represented in Figure 1) obtaining:
- gaseous products (Stream 9), i.e. fuel gas and liquid petroleum gas (LPG) which are recovered and used as such as fuels;
- liquid products (Stream 10), i.e. naphtha, atmospheric gas oil (AGO) and vacuum gas oil (VGO) which are sent to separation (not represented in Figure 1) and, subsequently, to upgrading (e.g., by means of hydrogenation), so as to obtain biofuels for automotive (i.e. bio-diesel, bio-gasoline) (Stream 12);
- a fraction of heavier products (500+°C) (i.e. non-converted products) (Stream 11) which also contains the nanodispersed hydrogenation catalyst, together with the small fraction of coke optionally formed and sulfides of the metals present in the hydrocarbon feedstock itself (Stream 4), which is recycled (i.e. recycled stream (Stream 14), after blow down (Stream 13), to hydroconversion to which a new fresh hydrocarbon feedstock and make-up catalyst are

also fed (not represented in Figure 1).

Alternatively, said oily phase consisting of bio-oil (Stream 2) can be sent, as such, to hydroconversion (not represented in Figure 1).

Some illustrative and non-limiting examples are provided for a better understanding of the present invention and for its practical embodiment.

### EXAMPLE 1

500 g of sludges deriving from an urban wastewater treatment plant (clean and dirty water cycle, rain water) were fed, by means of a suitable dosage system, into a 1 litre stirred autoclave. The dry weight of said sludges was equal to 30% by weight (150 g).

After creating an inert atmosphere inside the autoclave by washings with nitrogen, the autoclave was rapidly heated so as to reach an internal temperature of 310°C: the whole was kept under these conditions for 1 hr, under stirring, and it was observed that the internal pressure of the autoclave reached the maximum pressure of 110 bar.

The autoclave was then rapidly cooled to 80°C and the gaseous phase was separated. Said gaseous phase was analyzed separately by means of gas-chromatographic techniques and proved to be equal to about 12 g (8% by weight of the initial dry weight). The analysis showed that the gaseous phase consisted for 90% of carbon dioxide (CO₂).

The reaction raw product thus obtained was separated under heat in a gravitational separator, obtaining three phases:
- an oily phase consisting of bio-oil which, once anhydrified, proved to be equal to 43.5 g (29% by weight of the initial dry weight);
- a solid phase consisting of a solid residue equal to 75 g (50% by weight of the initial dry weight);
- an aqueous phase equal to 360 g having a sludges content of 19.5 g (13% by weight of the initial dry weight).

Said oily phase consisting of bio-oil (hereinafter indicated as "bio-oil") whose characteristics are specified in Table 1, was subjected to hydroconversion.

The following products were also subjected to hydroconversion:
- a vacuum residue (VR) of a Caucasus origin (Ural) (hereinafter indicated as "Ural VR") (reference test) whose characteristics are specified in Table 1;
- a mixture of bio-oil/Ural VR (weight ratio 25/75).

For this aim, the hydroconversion was carried out in a laboratory plant with a reactor having a total volume of 40 cm³. The catalyst and the hydrocarbon feedstock (i.e. the oily phase consisting of bio-oil, or Ural VR, or the mixture of bio-oil/Ural VR) were introduced into the reactor at the beginning of the test. The reactor was subsequently brought to the temperature value and under a hydrogen pressure: said operative conditions were kept constant for the whole duration of the test. The three hydroconversion tests were carried out under the following operative conditions:
- hydrocarbon feedstock treated: 10 g;
- catalyst used: nanodispersed molybdenum sulfide (MoS₂) ;
- molybdenum (Mo) concentration: 3000 wppm;
- operative pressure: 160 bar;
- reaction temperature: 430°C;
- residence time: 5 hrs.

The products obtained from the hydroconversion were characterized: the data obtained are reported in Table 2.

**Table 1**

| CHARACTERISTICS | STANDARD | BIO-OIL (% weight) | URAL VR (% weight) |
|---|---|---|---|
| Distillation | ASTM D2887 - 08 | | |
| IBP (170°C) | | 0.3 | - |
| 170°C-300°C | | 16.8 | 0.2 |
| 350°C-500°C | | 28.5 | 6.4 |
| 500+°C | | 42.5 | 93.0 |
| | | | |
| Sulfur | EN ISO 20846:2011 | 0.75 | 3.07 |
| Nitrogen | ASTM D5291 - 10 | 5.82 | 0.59 |

**Table 2**

| CHARACTERISTICS | STANDARD | URAL VR (% w) | BIO-OIL/URAL VR (% w) | BIO-OIL (% w) |
|---|---|---|---|---|
| H₂S⁽¹⁾ | - | 1.3 | 0.1 | - |
| GAS⁽¹⁾ (C₁-C₄) | - | 3.7 | 3.5 | 4.9 |
| | | | | |
| DISTILLATION | ASTM D2887-08 | | | |
| IBP (170°C) | | 7.8 | 8.4 | 5.8 |
| 170°C-300°C | | 41.3 | 48.0 | 64.7 |
| 350°C-500°C | | 30.7 | 29.8 | 17.3 |
| 500+°C | | 17.2 | 15.6 | 5.8 |
| | | | | |
| ^{Solid products formed (2)} (THFi) | - | 1.4 | 1.6 | 3.2 |

| | | | | |
|---|---|---|---|---|
| ⁽¹⁾ : determined through gas-chromatographic techniques; ⁽²⁾ : insoluble in tetrahydrofuran. | | | | |

From the data reported in Table 2, it can be seen that bio-oil, as such, or mixed with Ural VR, can be subjected to hydroconversion operating under the same operative conditions used in the case of Ural VR, without negatively influencing the formation of the final products (i.e. biofuels or fuels).

### EXAMPLE 2

A reference plant was used for the treatment of urban wastewater (clean and dirty water cycle, rain water) which treats 100 million m³/year of wastewater. The wastewater was subjected to pre-treatment by passing through the screening, sand removal and de-oiling sections, obtaining an aqueous phase which was sent to wastewater treatment, obtaining sludges and purified water for irrigation. The sludges obtained from the above-mentioned treatment (aerobic bacterial oxidation) were collected, obtaining 46000 tons/year of sludges (32% dry content).

The 46000 tons/year of wet sludges were sent, in continuous, to liquefaction, i.e. to a tubular reactor. The liquefaction was carried out at 310°C (internal temperature of the reactor), at 110 bar (internal pressure of the reactor), for about 1 hour.

The reaction raw product was separated, in continuous, in a gravitational separator, obtaining the following phases:
- an aqueous phase (31000 tons/year), which was sent directly to said urban wastewater treatment plant and which proved to be equal to 0.03% by volume with respect to the total volume of wastewater treated in said treatment plant (this did not cause any variation in the performances of said treatment plant, as water was obtained, which completely fell within the specifications required by law);
- a solid phase consisting of a solid residue (7910 tons/year) which was sent to a thermovalorization;
- an oily phase consisting of bio-oil (4416 tons/year);
- a gaseous phase sent to energy recovery on the basis of its residual calorific power.

The oily phase consisting of bio-oil, without any particular pre-treatment, was sent to a refinery hydroconversion section in slurry phase of heavy crude oils operating with the EST technology (Eni Slurry Technology), having a capacity equal to 44000 tons/year, in co-feeding with Ural VR in a ratio of 1/9. The hydroconversion process in slurry phase was carried out in the presence of hydrogen (H₂), under the following operative conditions:
- catalyst used: nanodispersed molybdenum sulfide (MoS₂) ;
- concentration of molybdenum (Mo): 3000 wppm;
- operative pressure: 160 bar;
- reaction temperature: 430°C;
- residence time: 4 hours.

The reaction effluent was sent to the separation section, obtaining:
- gaseous products, i.e. fuel gas and liquid petroleum gas (LPG) which are used as such as fuels;
- liquid products, i.e. naphtha, atmospheric gas oil (AGO) and vacuum gas oil (VGO) which are sent to separation and subsequently to upgrading by means of hydrogenation, so as to obtain biofuels for automotive (i.e. bio-diesel, bio-gasoline);
- a fraction of heavier products (500+°C) (i.e. non-converted products) which also contains the nanodispersed hydrogenation catalyst, together with the small fraction of coke optionally formed and sulfides of the metals present in the hydrocarbon feedstock itself (i.e. oily phase consisting of bio-oil + Ural VR), which is recycled, after blow down, to hydroconversion to which a new fresh hydrocarbon feedstock and make-up catalyst are also fed.

A reference test was also carried out, by feeding only Ural VR to the hydroconversion section in slurry phase.

The yields of the products obtained (%) are reported in Table 3.

**Table 3**

| PRODUCTS | BIO-OIL/URAL VR (%) | URAL VR |
|---|---|---|
| FG | 5.6 | 5.7 |
| LPG | 3.1 | 2.4 |
| Naphtha | 5.5 | 5.7 |
| Diesel | 44.8 | 43.4 |
| VGO | 39.1 | 41.0 |

From the data reported in Table 3, it can be seen that the bio-oil used in a mixture with Ural VR can be subjected to hydroconversion, operating under the same operative conditions used in the case of Ural VR, without negatively influencing the formation of the final products (i.e. biofuels or fuels).

## Claims

1. An integrated process for the production of biofuels from solid urban waste which comprises:
- subjecting said waste to liquefaction obtaining a mixture comprising an oily phase consisting of bio-oil, a solid phase and an aqueous phase;
- subjecting the mixture obtained from said liquefaction to separation obtaining an oily phase consisting of bio-oil, a solid phase and an aqueous phase;
- subjecting the oily phase consisting of bio-oil obtained from said separation to hydroconversion in slurry phase, in the presence of at least one nanodispersed hydrogenation catalyst;
wherein said liquefaction is carried out at a temperature ranging from 150°C to 350°C, at a pressure ranging from 5 bar to 170 bar, and for a time ranging from 5 minutes to 240 minutes.

2. The integrated process for the production of biofuels from solid urban waste according to claim 1, wherein said solid urban waste is selected from:
- the organic fraction of solid urban waste deriving from selected collection;
- prunings deriving from the maintenance of public parks;
- agribusiness waste products and waste products of large retailers;
- primary and/or biological sludges produced by urban water treatment plants;
or mixtures thereof.

3. The integrated process for the production of biofuels from solid urban waste according to any of the previous claims, wherein said solid urban waste is treated by subjecting it to a preliminary grinding or sizing process before being subjected to said liquefaction.

4. The integrated process for the production of biofuels from solid urban waste according to any of the previous claims, wherein said solid urban waste is wet.

5. The integrated process for the production of biofuels from solid urban waste according to claim 4, wherein said solid urban waste has a water content higher than or equal to 50% by weight with respect to the total weight of said solid urban waste.

6. The integrated process for the production of biofuels from solid urban waste according to claim 5, wherein said solid urban waste has a water content ranging from 55% by weight to 80% by weight with respect to the total weight of said solid urban waste.

7. The integrated process for the production of biofuels from solid urban waste according to any of the previous claims, wherein said oily phase consisting of bio-oil is subjected to hydroconversion together with heavy oils of a fossil origin such as heavy crude oils, bitumens deriving from tar sands, distillation residues, heavy residues deriving from thermal treatment processes, oils deriving from coal, oil shales.

8. The integrated process for the production of biofuels from solid urban waste according to claim 7, wherein said oily phase consisting of bio-oil and said heavy oils of a fossil origin are used in a weight ratio ranging from 0.01 to 50.

9. The integrated process for the production of biofuels from solid urban waste according to any of the previous claims, wherein said hydroconversion is carried out in the presence of a stream of hydrogen or of a stream consisting of a mixture of hydrogen/hydrogen sulfide (H₂S).

10. The integrated process for the production of biofuels from solid urban waste according to any of the previous claims, wherein said nanodispersed hydrogenation catalyst is selected from sulfides of transition metals such as molybdenum sulfide (MoS₂), tungsten sulfide (WS₂), or mixtures thereof, or an oil-soluble precursor of the same.

11. The integrated process for the production of biofuels from solid urban waste according to any of the previous claims, wherein said hydrogenation catalyst is used in such a quantity that the concentration of transition metal present in the oily phase consisting of bio-oil, or in the oily phase consisting of bio-oil together with heavy oils of a fossil origin, ranges from 50 wppm to 50000 wppm.

12. The integrated process for the production of biofuels from solid urban waste according to any of the previous claims, wherein said hydroconversion is carried out at a temperature ranging from 350°C to 480°C.

13. The integrated process for the production of biofuels from solid urban waste according to any of the previous claims, wherein said hydroconversion is carried out at a pressure ranging from 100 bar to 200 bar.

14. The integrated process for the production of biofuels from solid urban waste according to any of the previous claims, wherein said hydroconversion is carried out with an average residence time ranging from 2 hours to 8 hours.
